Europäisches Patentamt

European Patent Office

Office européen des brevets

(11) Numéro de publication: **0 255 045 B1**

# FASCICULE DE BREVET EUROPEEN

(45) Date de publication de fascicule du brevet:
**11.09.91**

(51) Int. Cl.⁵: **H04L 25/497**

(21) Numéro de dépôt: **87110678.7**

(22) Date de dépôt: **23.07.87**

(54) Circuit logique de détection pour un système de transmission synchrone de données à symboles ternaires et contrôle des interférences intersymboles de type réponse partielle classe 1 n = 2.

(30) Priorité: **28.07.86 FR 8610926**

(43) Date de publication de la demande:
**03.02.88 Bulletin 88/05**

(45) Mention de la délivrance du brevet:
**11.09.91 Bulletin 91/37**

(84) Etats contractants désignés:
**BE DE FR GB IT LU NL SE**

(56) Documents cités:
**US-A- 3 388 330**
**US-A- 3 478 267**

(73) Titulaire: **ALCATEL CIT**
**12 Rue de la Baume**
**F-75008 Paris(FR)**

(72) Inventeur: **Jaffre, Pierre**
**Résidence Ker Lann 3 rue Jeanne d'Arc**
**F-22300 Lannion(FR)**
Inventeur: **Le Mouel, Bernard**
**Gouzabas**
**Saint Quay Perros F-22700 Perros Guirec(FR)**
Inventeur: **Robin, Jean-François**
**Route de Brest Plouvenez Moedec**
**F-22810 Belle isle En Terre(FR)**
Inventeur: **Thepaut, Pierre**
**5 rue de Kermaria**
**F-22300 Lannion(FR)**

(74) Mandataire: **Weinmiller, Jürgen et al**
**Lennéstrasse 9 Postfach 24**
**W-8133 Feldafing(DE)**

## Description

La présente invention est relative aux transmissions numériques synchrones.

Dans ce genre de transmission où l'on rencontre souvent en ligne des couplages par transformateur, on utilise en général un signal sans composantes continue ou basses fréquences constitué d'une suite synchrone de symboles multivalents, le plus souvent ternaires, codant les données binaires à transmettre. Ces symboles subissent au cours de leur acheminement par des voies à bande passante nécessairement limitée des affaiblissements et des distorsions qui les rendent méconnaissables au bout d'une certaine distance de parcours.

Les interférences intersymboles sont parmi les distorsions les plus gênantes. On cherche la plupart du temps à les éviter en mettant en oeuvre les critères établis par Nyquist c'est à dire en donnant à la voie de transmission après égalisation, une réponse en fréquence telle que la somme des amplitudes en deux points de fréquences symétriques par rapport à la demi-fréquence des symboles soit constante. La plus usitée de ces réponses en fréquence est celle dite en cosinus surélévé qui est caractérisée par le pourcentage de bande utilisée en excès par rapport à la demi-fréquence de symboles $f_1$ dit facteur de retombée ou "roll off", souvent choisi à 0,7 pour limiter la déformation individuelle des symboles (ouverture du diagramme de l'oeil) à un niveau acceptable.

Une alternative à la suppression des interférences intersymboles consiste à les contrôler. C'est la technique dite à réponse partielle décrite par exemple dans le brevet américain n° 3.388.330. Cette technique consiste à modeler la réponse de la voie de transmission de manière que sa réponse impulsionnelle s'étale sur un multiple entier de la durée T d'un symbole et que le signal en réception d'une suite de symboles résulte d'une combinaison linéaire de formes en $[\sin (\pi t/T)] / (\pi t/T)$ ayant chacune pour origine l'un des symboles émis. Cette technique permet de limiter strictement la bande passante de la voie de transmission, dans le domaine des fréquences hautes, à la demi-fréquence $f_1$ des symboles et par conséquent de limiter le bruit thermique par rapport à une transmission sans interférence entre symboles en contrepartie d'une augmentation du nombre des niveaux à distinguer en réception.

Sur certaines voies, la transmission avec des interférences intersymboles contrôlées de type réponse partielle est plus avantageuse que la transmission sans interférences intersymboles car elle améliore le rapport signal à bruit, l'avantage de réduction du bruit thermique l'emportant sur l'inconvénient de l'augmentation du nombre de niveaux en réception.

Il existe différentes classes de réponse partielle selon la combinaison linéaire de symboles obtenue en réception, chacune de ces classes se subdivisant en fonction du nombre de symboles participant à la combinaison.

La classe 1 de type n = 2 est parmi les plus employées. Elle se définit par une caractéristique de transfert pour la voie de transmission égalisée en :

$$H(f) = \cos \pi \, Tf$$

qui procure en réception pour chaque symbole émis un signal composé de la superposition de deux formes d'ondes en $[\sin (\pi t/T) / (\pi t/T)$ successives décalées d'une période T et affectées chacune d'un coefficient multiplicatif correspondant au niveau du symbole d'origine. Aux instants d'échantillonnage d'un signal reçu correspondant à l'émission de symboles ternaires de niveaux 0, ± 1 on obtient cinq valeurs possibles d'amplitude que l'on indexe par 0, ± 1, ± 2. et qui correspondent à l'addition du niveau du symbole ternaire émis avec celui du symbole qui l'a immédiatement précédé. La détection consiste en l'opération inverse c'est-à-dire en la soustraction du niveau du symbole précédemment détecté au niveau d'échantillonnage du signal reçu. Mettant en oeuvre le niveau du symbole précédemment détecté, elle est sujette à un phénomène de propagation d'erreurs qui est cependant limité par le fait que les niveaux extrêmes d'échantillonnage du signal reçu correspondent à un symbole émis de valeur extrême de même signe car ils ne peuvent résulter que de la superposition de deux symboles successifs de ce type. Un circuit mettant en oeuvre une technique de détection, pour des symboles binaires et une réponse partielle de classe 2, type n = 3, est décrit par le document US-A-3 478 267.

La présente invention a pour but un circuit logique qui fasse cette opération de détection avec une grande rapidité et une propagation limitée des erreurs tout en étant facilement intégrable.

Elle a pour objet un circuit logique de détection opérant d'après des signaux de dépassement de seuils délivrés par un comparateur qui situe le niveau du signal reçu par rapport à quatre seuils : deux extrêmes, l'un positif, l'autre négatif, et deux intermédiaires l'un positif, l'autre négatif répartis entre les cinq valeurs possibles du niveau de réception et délivrant la valeur du symbole ternaire détecté sous la forme de deux composantes binaires, l'une dite positive étant au niveau logique 1 uniquement lorsque le symbole ternaire détecté est de valeur + 1, l'autre dite négative étant au niveau logique 1 uniquement lorsque le symbole ternaire détecté est de valeur - 1.

Ce circuit logique de détection comporte :

- une mémoire de composante binaire positive mémorisant la composante binaire positive du symbole ternaire précédemment détecté,
- une mémoire de composante binaire négative mémorisant la composante binaire négative du symbole ternaire précédemment détecté,
- des premiers moyens de logique combinatoire permettant d'appliquer un niveau logique 1 soit en entrée de la mémoire de composante binaire positive lorsque le comparateur signale un dépassement positif de son seuil extrême positif, soit en entrée de la mémoire de composante binaire négative lorsque le comparateur signale un dépassement negatif de son seuil extrême négatif,
- des deuxièmes moyens de logique combinatoire permettant d'appliquer un niveau logique 1 soit en entrée de la mémoire de composante binaire positive lorsque le comparateur signale un dépassement positif de son seuil intermédiaire positif alors que la mémoire de composante binaire positive renferme un niveau logique 0, soit en entrée de la mémoire de composante binaire négative lorsque le comparateur signale un dépassement négatif de son seuil intermédiaire négatif alors que la mémoire de composante binaire négative renferme un niveau logique 0 et
- des troisièmes moyens de logique combinatoire permettant d'appliquer en entrée de chacune des mémoires de composante binaire le niveau logique disponible à la sortie de l'autre lorsque le comparateur ne signale ni dépassement positif de ses seuils positifs ni dépassement négatif de ses seuils négatifs.

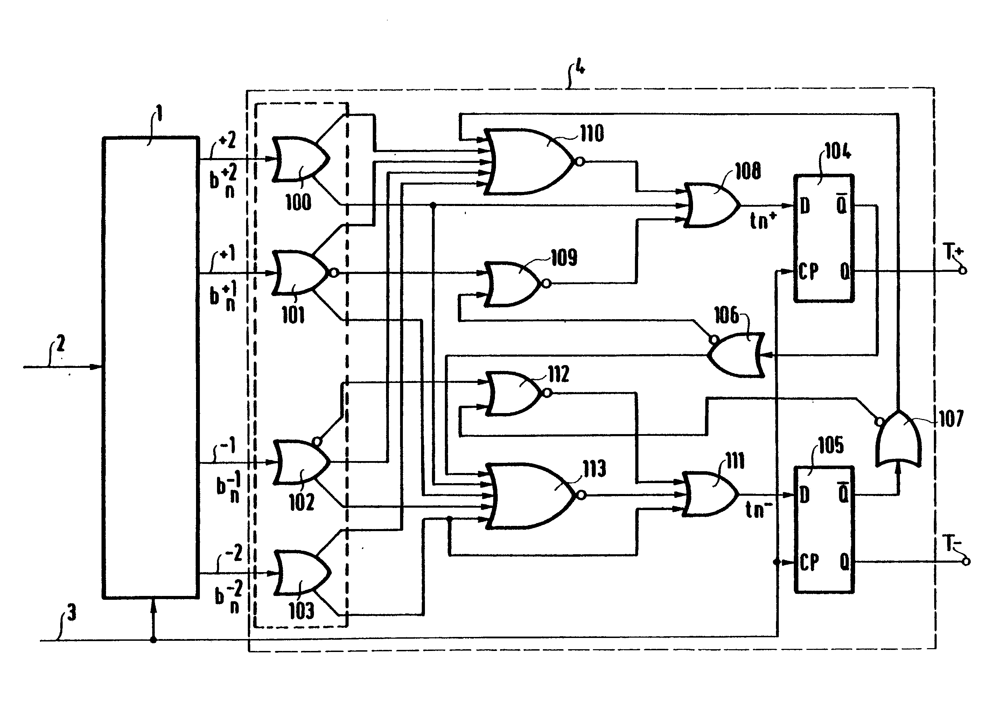

D'autres caractéristiques et avantages de l'invention ressortiront de la description ci-après d'un mode de réalisation donné à titre d'exemple. Cette description sera faite en regard de la figure unique du dessin qui représente de façon schématique le mode de réalisation.

Le circuit de détection qui va être décrit est prévu pour être utilisé en réception d'une suite synchrone de symboles ternaires de valeurs nulle, positive ou négative 0, ± 1 transmise par une voie de transmission ayant une réponse de fréquence de type réponse partielle, classe 1, n égal 2, et disposé à la suite d'un comparateur identifiant la valeur prise parmi les cinq possibles 0, ± 1, ± 2, par le niveau du signal reçu en cours de symbole.

Le comparateur 1 a quatre seuils équitablement répartis entre les cinq niveaux possibles pour le signal reçu. Il est formé, par exemple, d'une batterie de quatre comparateurs élémentaires à seuil qui traitent en parallèle le signal reçu appliqué sur une entrée 2 et qui sont suivis de registres tampon échantillonnant leurs sorties en milieu de symbole reçu (milieu du diagramme de l'oeil) sous la commande d'un signal d'horloge de rythme de symboles appliqué sur une entrée 3 et récupéré en réception selon les techniques habituelles. Il présente quatre sorties binaires parallèles correspondant chacune à la sortie d'un comparateur élémentaire à seuil :

- une sortie + 2 qui correspond au comparateur élémentaire ayant le plus grand seuil positif, entre les niveaux + 1 et + 2 du signal reçu, et sur laquelle est disponible à la suite de l'échantillonnage en cours de détection d'un symbole reçu Sn, un signal logique $b_n^{+2}$ de dépassement positif de seuil indiquant par un niveau logique 1 que ce seuil est dépassé positivement et donc que le niveau du signal reçu est + 2,
- une sortie + 1 qui correspond au comparateur élémentaire ayant le seuil positif intermédiaire, entre les niveaux 0 et + 1 du signal reçu et sur laquelle est disponible, à la suite de l'échantillonnage en cours de détection d'un symbole reçu Sn, un signal logique $b_n^{+1}$ de dépassement positif de seuil indiquant par un niveau logique 1 que ce seuil est dépassé positivement et donc que le niveau du signal reçu est +1 ou +2
- une sortie - 2 qui correspond au comparateur élémentaire ayant le seuil négatif le plus grand en valeur absolue, c'est-à-dire situé entre les niveaux - 1 et - 2 du signal reçu, et sur laquelle est disponible, à la suite de l'échantillonnage en cours de détection d'un symbole reçu Sn, un signal logique $b_n^{-2}$ de dépassement négatif de seuil indiquant par un niveau logique 1 que ce seuil est dépassé négativement et donc que le niveau du signal reçu est - 2
- une sortie - 1 qui correspond au comparateur élémentaire ayant le seuil négatif intermédiaire, entre les niveaux 0 et - 1 du signal reçu et sur laquelle est disponible, à la suite de l'échantillonnage en cours de détection d'un symbole reçu Sn, un signal logique $b_n^{-1}$ de dépassement négatif de seuil indiquant par un niveau logique 1 que ce seuil est dépassé négativement et donc que le niveau du signal reçu est - 1 ou -2.

Le tableau ci-après résume l'ensemble des états logiques des signaux de dépassement de seuil $b_n^{+2}$, $b_n^{+1}$, $b_n^{-1}$, $b_n^{-2}$, du comparateur en fonction du niveau d'échantillonnage 0, ± 1, ± 2 du signal reçu :

|  | -2 | -1 | 0 | +1 | +2 |
|---|---|---|---|---|---|
| $b_n^{+2}$ | 0 | 0 | 0 | 0 | 1 |
| $b_n^{+1}$ | 0 | 0 | 0 | 1 | 1 |
| $b_n^{-1}$ | 1 | 1 | 0 | 0 | 0 |
| $b_n^{-2}$ | 1 | 0 | 0 | 0 | 0 |

Le circuit logique de détection 4 qui vient à la suite du comparateur à quatre seuils 1 délivre la valeur du symbole ternaire détecté Sn sous forme de deux composantes binaires l'une $\overset{+}{tn}$ dite positive étant au niveau logique 1 uniquement lorsque le symbole ternaire détecté est de valeur +1, l'autre $\overline{tn}$ dite négative étant au niveau logique 1 uniquement lorsque le symbole ternaire détecté est de valeur - 1. Il comporte en entrée un étage de quatre amplificateurs 100, 101, 102, 103 à sorties inverseuses et non inverseuses distribuant des versions complémentées et non complémentées des signaux binaires de dépassement de seuils $b_n^{+2}$, $b_n^{+1}$, $b_n^{-1}$, $b_n^{-2}$, délivrés par le comparateur à quatre seuils 1, et en sortie deux bascules de type D 104, 105 mémorisant les composantes binaires positive $tn-1$ et négative $\overline{tn}-1$ du symbole ternaire précédemment détecté suivies de deux amplificateurs 106, 107 à sorties inverseuses et non inverseuses distribuant les versions complémentées et non complémentées de ces composantes binaires.

Les bascules de type D 104, 105 mémorisant les composantes binaires positive et négative des symboles ternaires détectés sont inscrites sous la commande du signal d'horloge de rythme récupéré en réception disponible sur l'entrée 3. Leurs sorties non inverseuses Q sont connectées à des sorties T + et T- du circuit logique de détection sur lesquelles sont disponibles les composantes binaires positive $\overset{+}{tn}-1$ et négative $\overline{tn}-1$ du symbole ternaire précédemment détecté Sn-1 tandis que leurs sorties inverseuses $\overline{Q}$ sont connectées aux amplificateurs 106, 107.

La composante binaire positive $\overset{+}{tn}$ du symbole ternaire en cours de détection Sn appliquée sur l'entrée D de la bascule 104 provient d'une porte logique de type "ou" 108 réglant les différents cas de superposition linéaire pouvant résulter en réception de l'émission d'un symbole ternaire Sn de valeur +1.

Un première entrée de la porte logique de type "ou" 108 est directement reliée en sortie de l'amplificateur 100. Elle permet d'imposer à la composante binaire positive $\overset{+}{tn}$ du symbole ternaire Sn en cours de détection un niveau logique 1 provenant du signal de dépassement positif du seuil extrême positif $b_n^{+2}$. En effet un niveau + 2 en réception ne peut avoir été provoqué que par la superposition de deux symboles ternaires successifs Sn-1 et Sn de valeur + 1.

Une deuxième entrée de la porte logique de type "ou" 108 est reliée aux sorties inverseuses des amplificateurs 101 et 106 par l'intermédiaire d'une porte logique de type "non ou" 109 à deux entrées. Elle permet d'imposer à la composante binaire positive $\overset{+}{tn}$ du symbole ternaire Sn en cours de détection un niveau logique 1 provenant du signal de dépassement positif du seuil intermédiaire positif $b_n^{1+}$ lorsque la composante binaire position $\overset{+}{tn}-1$ du symbole ternaire Sn-1 précédemment détecté est au niveau logique 0. En effet, un niveau en réception égal ou supérieur à + 1 ne peut avoir été provoqué que par l'émission d'un symbole ternaire Sn de valeur + 1 dans le cas où le symbole ternaire précédemment détecté Sn-1 n'était pas de valeur + 1.

Une troisième entrée de la porte logique de type "ou" 108 est reliée aux sorties non inverseuses des amplificateurs 100, 101, 102, 103 et 107 par l'intermédiaire d'une porte logique de type "non ou" 110 à cinq entrées. Elle permet d'imposer à la composante binaire positive $\overset{+}{tn}$ du symbole ternaire Sn en cours de détection un niveau logique 1 provenant de la composante binaire négative du symbole ternaire précédemment détecté lorsque l'ensemble des signaux de dépassement de seuil bn sont au niveau logique 0 traduisant un niveau en réception égal à 0. En effet, un niveaur en réception égal à 0 ne peut avoir été provoqué que par l'émission d'un symbole ternaire Sn de valeur 1 dans le cas où le symbole ternaire Sn-1 précédemment détecté était de valeur - 1.

L'ensemble de ces cas est résumé par l'équation logique de définition de la composante binaire positive $\overset{+}{tn}$ du symbole Sn en cours de détection :

4

$$t_{\bar{n}}^{\pm} = b_n^{+2} + b_n^{+1} . \overline{t_{\bar{n}-1}^{\pm}} + \overline{b_n^{+2}} . \overline{b_n^{+1}} . \overline{b_n^{-1}} . \overline{b_n^{-2}} . t_{\bar{n}-1}^{\pm}$$

D'une manière similaire, la composante binaire négative $\overline{t_n}$ du symbole ternaire Sn en cours de détection appliquée à l'entrée D de la bascule 105 provient d'une porte logique de type "ou" 111 à trois entrées réglant les différents cas de superposition linéaire pouvant résulter en réception de l'émission d'un symbole ternaire Sn de valeur - 1.

Une première entrée de la porte logique de type "ou" 111 est directement reliée en sortie de l'amplificateur 103. Elle permet d'imposer à la composante binaire négative $\overline{t_n}$ du symbole ternaire Sn en cours de détection un niveau logique 1 provenant du signal de dépassement négatif du seuil extrême négatif $b_n^{-2}$. En effet, un niveau - 2 en reception ne peut avoir été provoqué que par la superposition de deux symboles ternaires successifs Sn et Sn-1 de valeur -1.

Une deuxième entrée de la porte logique de type "ou" 111 est reliée aux sorties inverseuses des amplificateurs 102 et 107 par l'intermédiaire d'une porte logique de type "non ou" 112 à deux entrées. Elle permet d'imposer à la composante binaire négative $\overline{t_n}$ du symbole ternaire Sn en cours de détection un niveau logique 1 provenant du signal de dépassement négatif du seuil intermédiaire négatif $b_n^{-1}$ lorsque la composante binaire négatif $\overline{t_{n-1}}$ du symbole ternaire Sn-1 précédemment détecté est au niveau logique 0. En effet, un niveau en réception égal ou inférieur à - 1 ne peut avoir été provoqué que par l'émission d'un symbole ternaire Sn de valeur - 1 dans le cas où le symbole ternaire Sn-1 précédemment détecté n'était pas de valeur - 1.

Une troisième entrée de la porte logique de type "ou" 111 est reliée aux sorties non inverseuses des amplificateurs 100, 101, 102, 103 et 106 par l'intermédiaire d'une porte logique de type "non ou" 113 à cinq entrées. Elle permet d'imposer à la composante binaire négative $\overline{t_n}$ du symbole ternaire Sn en cours de détection un niveau logique 1 provenant de la composante binaire positive $t_{n-1}^{+}$ du symbole ternaire Sn-1 précédemment détecté lorsque l'ensemble des signaux de dépassement de seuil bn sont au niveau logique 0 traduisant un niveau de réception égal à 0. En effet, un niveau en réception égal à 0 ne peut avoir été provoqué que par l'émission d'un symbole ternaire Sn de valeur - 1 dans le cas où le symbole ternaire Sn-1 précédemment détecté était de valeur + 1.

L'ensemble de ces cas est résumé par l'équation logique de définition de de la composante binaire négative $\overline{t_n}$ du symbole Sn en cours de détection :

$$t_{\bar{n}}^{-} = b_n^{-2} + b_n^{-1} . \overline{t_{\bar{n}-1}^{-}} + \overline{b_n^{+2}} . \overline{b_n^{+1}} . \overline{b_n^{-1}} . \overline{b_n^{-2}} . t_{\bar{n}-1}^{\pm}$$

Ce mode de détection limite la propagation d'erreur. Celle-ci est en effet inexistante pour les deux niveaux extrêmes ± 2 en réception qui conduisent à une détection sans prise en considération de la valeur du symbole ternaire Sn-1 précédemment détecté. De plus, il y a mise en oeuvre d'une correction dans le cas erroné où le niveau en réception est + 1, respectivement -1, alors que le symbole ternaire précédent a été détecté de valeur -1, respectivement + 1.

Le circuit logique de détection obtenu est très rapide, les signaux transitoires ayant au plus trois couches de portes logiques.

On peut, sans sortir du cadre de l'invention modifier certaines dispositions ou remplacer certains moyens par des moyens équivalents.

**Revendications**

1. Circuit logique de détection pour un système de transmission synchrone de données à symboles ternaires de valeurs nulle, positive ou négative 0, ± 1, et contrôle des interférences intersymboles de type réponse partielle classe 1, n = 2 engendrant en réception de chaque symbole ternaire un signal à cinq niveaux 0, ± 1, ± 2 provenant d'une superposition linéaire du symbole ternaire considéré avec celui qui l'a précédé, ledit circuit logique de détection opérant d'après des signaux de dépassement de seuils délivrés par un comparateur (1) qui situe le niveau du signal reçu par rapport à quatre seuils : deux extrêmes l'un positif, l'autre négatif et deux intermédiaires l'un positif, l'autre négatif répartis entre les cinq valeurs possibles de niveau en réception, délivrant la valeur du symbole ternaire détecté Sn sous forme de deux composantes binaires $\overset{+}{tn}$, $\overline{tn}$, l'une $\overset{+}{tn}$ dite positive étant au niveau logique 1 uniquement lorsque le symbole ternaire détecté Sn est de valeur positive + 1 et l'autre $\overline{tn}$ dite négative étant au niveau logique + 1 uniquement lorsque le symbole ternaire détecté Sn est de valeur négative -1, et étant caractérisé en ce qu'il comporte :

- une mémoire de composante binaire négative (104) mémorisant la composante binaire positive $\overset{+}{tn}$-1 du symbole ternaire précédemment détecté Sn-1,
- une mémoire de composante binaire négative (105) mémorisant la composante binaire négative $\overline{tn}$-1 du symbole ternaire précédemment détecté Sn-1,
- des premiers moyens de logique combinatoire (108, 111) permettant d'appliquer un niveau logique 1 soit en entrée de la mémoire de composante binaire positive (104) lorsque le comparateur (1) signale un dépassement positif de son seuil extrême positif, soit en entrée de la mémoire de composante binaire négative (105) lorsque le comparateur signale un dépassement négatif de son seuil extrême négatif,
- des deuxièmes moyens de logique combinatoire (109, 112) permettant d'appliquer un niveau logique 1 soit en entrée de la mémoire de composante binaire positive (104) lorsque le comparateur (1) signale un dépassement positif de son seuil intermédiaire positif alors que la mémoire de composante binaire positive (104) renferme un niveau logique 0, soit en entrée de la mémoire de composante binaire négative (105) lorsque le comparateur (1) signale un dépassement négatif de son seuil intermédiaire négatif alors que la mémoire de composante binaire négative (105) renferme un niveau logique 0 et
- des troisièmes moyens de logique combinatoire (110, 113) permettant d'appliquer en entrée de chacune des mémoires de composante binaire (104, 105) le niveau logique disponible à la sortie de l'autre lorsque le comparateur (1) ne signale ni dépassement positif de ses seuils positifs ni dépassement négatif de ses seuils négatifs.

2. Circuit logique de détection selon la revendication 1 opérant à la suite d'un comparateur à quatre seuils délivrant en parallèle quatre signaux binaires de dépassement de seuil qui sont affectés chacun à l'un de ses seuils dont deux $b_n^{+2}$ et $b_n^{+1}$ affectés aux seuils positifs extrême et intermédiaire sont au niveau logique 0 en l'absence de dépassement positif de ces derniers et dont deux autres $b_n^{-2}$ et $b_n^{-1}$ affectés aux seuils négatifs extrême et intermédiaire sont au niveau logique 0 en l'absence de dépassement négatif de ces derniers, le dit circuit logique de détection étant caractérisé en ce que les moyens de logique combinatoire sont interconnectés aux mémoires de composantes binaires positive et négative de manière à vérifier pour la composante binaire positive $\overset{+}{tn}$ du symbole Sn appliquée en entrée de la mémoire de composante binaire positive l'équation logique :

$$\overset{+}{tn} = b_n^{+2} + b_n^{+1}.\overset{+}{tn}\text{-}1 + \overline{b_n^{+2}}.\overline{b_n^{+1}}.\overline{b_n^{-1}}.\overline{b_n^{-2}}.\overline{tn}\text{-}1$$

et pour la composante binaire négative $\overline{tn}$ du symbole Sn appliquée en entrée de la mémoire de composante binaire négative l'équation logique :

$$\overline{tn} = b_n^{-2} + b_n^{-1}\;\overline{tn}\text{-}1 + \overline{b_n^{+2}}.\overline{b_n^{+1}}.\overline{b_n^{-1}}.\overline{b_n^{-2}}.\overset{+}{tn}\text{-}1$$

3. Circuit logique de détection selon la revendication 2, caractérisé en ce que les dits premiers moyens de logique combinatoire comportent:
- une première porte logique de type "ou" (108) à trois entrées qui est connectée par sa sortie à l'entrée da la mémoire de composante binaire positive (104) et qui reçoit sur une première entrée le signal de dépassement du seuil extrême positif délivré par le comparateur (1) et
- une deuxième porte logique de type "ou" (111) à trois entrées qui est connectée par sa sortie à l'entrée de la mémoire de composante binaire négative (105) et qui reçoit sur une première entrée le signal de dépassement du seuil extrême négatif délivré par le comparateur (1).

4. Circuit logique de détection selon la revendication 3 caractérisé en ce que les dits deuxièmes moyens de logique combinatoire comportent :
   - une première porte logique de type "non ou" (109) à deux entrées qui est connectée par sa sortie à une deuxième entrée de la première porte logique de type "ou" (108) desdits premiers moyens de logique combinatoire et qui reçoit sur une entrée le signal de dépassement du seuil intermédiaire positif délivré par le comparateur (1) et complémenté par un inverseur (101), et sur l'autre entrée le signal de sortie de la mémoire de composante binaire positive (104) et
   - une deuxième porte logique de type "non ou" (112) à deux entrées qui est connectée par sa sortie à une deuxième entrée de la deuxième porte logique de type "ou" (111) desdits premiers moyens de logique combinatoire et qui reçoit sur une entrée le signal de dépassement du seuil intermédiaire négatif délivré par le comparateur et complémenté par un inverseur (102), et sur l'autre entrée le signal de sortie de la mémoire de composante binaire négative (105).

5. Circuit logique de détection selon la revendication 3, caractérisé en ce que les dits troisièmes moyens de logique combinatoire comportent :
   - une première porte logique de type "non ou" (110) à cinq entrées qui est connectée par sa sortie à une troisième entrée de la première porte logique de type "ou" (108) desdits premiers moyens de logique combinatoire et qui reçoit sur quatre entrées les quatre signaux de dépassement de seuil du comparateur et sur un cinquième entrée le signal complémenté de la sortie de la mémoire de composante binaire négative (105) et
   - une deuxième porte logique de type "non ou" (113) à cinq entrées qui est connectée par sa sortie à une troisième entrée de la deuxième porte logique de type "ou" (111) desdits premiers moyens de logique combinatoire et qui reçoit sur quatre entrées les quatres signaux de dépassement de seuil du comparateur et sur une cinquième entrée le signal complémenté da la sortie de la mémoire de composante binaire positive (104).

## Claims

1. A logic detector circuit for a synchronous data transmission system comprising ternary symbols taking zero, positive and negative values (0, +1 or -1), and with control of partial response class 1, $n = 2$ intersymbol interferences producing in response to the reception of each ternary symbol a signal on five levels (0, ±1, ±2) resulting from a linear superposition of the considered ternary symbol and the preceding one, said detector logic circuit operating on the basis of threshold overshoot signals delivered by a comparator (1) which allocates the level of the signal received relative to four thresholds: two extreme thresholds, one positive and one negative, and two intermediate thresholds, one positive and one negative, spaced over the five possible values of the receive level, delivering the value of the detected ternary symbol Sn in the form of two binary components $t\overset{+}{n}$ and $t\overline{n}$, of which one, $t\overset{+}{n}$, called positive component, is at logic level 1 only when the detected ternary symbol takes the value +1 and the other, $t\overline{n}$, called negative component, is at logic level 1 only when the detected ternary symbol takes the value -1, said logic detector circuit being characterized in that it comprises:
   - a positive binary component store (104) memorizing the positive binary component $t\overset{+}{n}$-1 of the previously detected ternary symbol Sn-1,
   - a negative binary component store (105) memorizing the negative binary component $t\overline{n}$-1 of the previously detected ternary symbol Sn-1,
   - first logic means (108, 111) adapted to apply logic 1 either to the input of said positive binary component store (104) when said comparator (1) indicates a positive overshoot of its positive extreme threshold or to the input of said negative binary component store (105) when said comparator indicates a negative overshoot of its negative extreme threshold,
   - second logic means (109, 112) adapted to apply logic level 1 either to the input of said positive binary component store (104) when said comparator (1) indicates a positive overshoot of its positive intermediate threshold while said positive binary component store holds a logic level 0, or to the input of the negative binary component store (105) when the comparator (1) indicates a negative overshoot of its negative intermediate threshold while said negative component store holds a logic level 0, and
   - third logic means (110, 113) adapted to apply to the input of each of said binary component stores (104, 105) the logic level available at the output of the other store when said comparator (1) does neither indicate a positive overshoot of its positive thresholds nor a negative overshoot of its negative thresholds.

7

2. A logic circuit detector according to claim 1, connected to the output of a comparator having four thresholds and delivering in parallel four threshold overshoot binary signals which are allocated each one to one of its thresholds, of which two, $b_n^{+2}$ and $b_n^{+1}$ are assigned to the positive extreme and intermediate thresholds and are at logic level 0 in the absence of a positive overshoot of said thresholds, and of which the other two, $b^{-2}$ and $b_n^{-1}$ , are assigned to the negative extreme and intermediate thresholds, are at logic level 0 in the absence of a negative overshoot of said negative extreme and intermediate thresholds, said detector logic circuit being characterized in that the combinational logic means are connected to the positive and negative binary component stores in such a way as to verify for the positive binary component tn of the symbol Sn applied to the input of the positive binary component store the logic equation:

$$ t_n^+ = b_n^{+2} + b_n^{+1} . t_{n-1}^+ + \overline{b_n^{-2}} . \overline{b_n^{+1} . b_n^{-1} . b_n^{-2}} . t_{n-1}^+ $$

and in such way as to verify for the negative binary component tn of the symbol Sn aplied to the input of the negative binary component store the logic equation:

$$ t_n^- = b_n^{-2} + b_n^{-1} \overline{t_{n-1}^-} + \overline{b_n^{+2} . b_n^{+1} . b_n^{-1} . b_n^{-2}} . t_{n-1}^+ $$

3. A logic detector circuit according to claim 2, characterized in that said first logic means comprise:
   - a first three-input OR gate (108) having its output connected to the input of the positive binary component store (104) and receiving on a first input the signal from the comparator (1) indicating overshooting of the positive extreme threshold, and
   - a second three-input OR gate (111) having its output connected to the input of the negative binary component store (105) and receiving on a first input the signal from the comparator (1) indicating overshooting of the negative extreme threshold.

4. A logic detector circuit according to claim 3, characterized in that said second logic means comprise:
   - a first two-input NOR gate (109) having its output connected to a second input of the first OR gate (108) of said first logic means and receiving on an input the signal from the comparator (1) indicating overshooting of the positive intermediate threshold, complemented by an inverter (101), and on its other input the output signal from the positive binary component store (104), and
   - a second two-input NOR gate (112) having its output connected to a second input of the second OR gate (111) of the first logic means and receiving on an input the signal from the comparator indicating overshooting of the negative intermediate threshold, complemented by an inverter (102), and on its other input the output signal of the negative binary component store (105).

5. A logic detector circuit according to claim 3, characterized in that said third logic means comprise:
   - a first five-input NOR gate (110) having its output connected to a third input of the first OR gate (108) of said first logic means and receiving on four inputs the four signals from the comparator indicating overshooting of the comparator thresholds and on a fifth input the complemented signal from the output of the negative binary component store (105), and
   - a second five-input NOR gate (113), having an output connected to a third input of the second OR gate (111) of said first logic means and receiving on four inputs the four signals from the comparator indicating overshooting of the comparator threshold and on a fifth input the complemented signal from the output of the positive binary component store (104).

**Patentansprüche**

1. Logische Detektorschaltung für ein synchrones Datenübertragungssystem mit ternären Symbolen der Wertgrößen 0, +1 oder -1 und mit Kontrolle der Interferenzen zwischen Symbolen vom Partialantworttyp der Klasse 1, Typ n=2, der beim Empfang von jedem ternären Symbol ein Signal mit fünf Pegeln

EP 0 255 045 B1

0, ± 1, ± 2 erzeugt, das aus einer linearen Überlagerung des betrachteten ternären Symbols mit dem vorhergehenden Symbol hervorgeht, wobei die logische Detektorschaltung auf der Basis von Schwellenüberschreitungssignalen arbeitet, die ein Komparator (1) liefert, der den Pegel des empfangenen Signals aufgrund von vier Schwellwerten zuweist, nämlich zwei Extremwerten, von denen einer positiv und der andere negativ ist, und zwei Zwischenwerten, von denen der eine positiv und der andere negativ ist, wobei diese Schwellwerte und die über die fünf möglichen Werte des Empfangspegels verteilt sind, und wobei die Schaltung den Wert des erfaßten ternären Symbols Sn in Form von zwei Binärkomponenten $t\overset{+}{n}$, $t\overline{n}$ liefert, von denen sich die eine, positive Komponente $t\overset{+}{n}$ nur dann auf Logikpegel 1 befindet, wenn das erfaßte ternäre Symbol Sn den positiven wert +1 besitzt, und von denen sich die andere, sogenannte negative Komponente $t\overline{n}$ nur dann auf Logikpegel +1 befindet, wenn das erfaßte ternäre Symbol Sn den negativen Wert -1 besitzt, dadurch gekennzeichnet ist, daß sie aufweist:

- einen Speicher (104) für die positive Binärkomponente, der die positive Komponente $t\overset{+}{n}$-1 des vorher erfaßten ternären Symbols Sn-1 speichert,
- einen Speicher (105) für die negative Binärkomponente, der die negative Komponente $t\overline{n}$-1 des vorher erfaßten ternären Symbols Sn-1 speichert,
- erste kombinatorische Logikmittel (108, 111), die es ermöglichen, einen Logikpegel 1 entweder an den Eingang des Speichers (104) für die positive Binärkomponente zu legen, wenn der Komparator (1) ein positives Überschreiten seines positiven Extrempegels anzeigt, oder an den Eingang des Speichers (105) für die negative Binärkomponente zu legen, wenn der Komparator ein negatives Überschreiten seines negativen Extrempegels anzeigt,
- zweite kombinatorische Logikmittel (109, 112), die es ermöglichen, einen Logikpegel 1 entweder an den Eingang des Speichers (104) für die positive Binärkomponente zu legen, wenn der Komparator (1) ein positives Überschreiten seines positiven Zwischenpegels anzeigt, während der Speicher (104) der positiven Binärkomponente einen Logikpegel 0 enthält, oder an den Eingang des Speichers (105) für die negative Binärkomponente zu legen, wenn der Komparator (1) ein negatives Überschreiten seines negativen Zwischenpegels anzeigt, während der Speicher (105) der negativen Binärkomponente einen Logikpegel 0 enthält, und
- dritte kombinatorische Logikmittel (110, 113), die es ermöglichen, an den Eingang jedes Binärkomponentenspeichers (104, 105) den am Ausgang des jeweils anderen Speichers liegenden Logikpegel anzulegen, wenn der Komparator (1) weder das positive Überschreiten seiner positiven Schwellwerte, noch das negative Überschreiten seiner negativen Schwellwerte anzeigt.

2. Logische Detektorschaltung nach Anspruch 1, die am Ausgang eines Komparators mit vier Schwellenwerten arbeitet und parallel vier binäre Schwellwertüberschreitungssignale liefert, welche jeweils einem Schwellwert des Komparators zugewiesen sind, von denen sich zwei den positiven Extrem- und Zwischenwerten zugewiesenen Werte $b_n^{+2}$ und $b_n^{+1}$ bei fehlender positiver Überschreitung der Extrem- und Zwischenwerte auf Logikpegel 0 befinden, und von denen sich zwei andere, den negativen Extrem- und Mittelwerten zugewiesene Werte $b_n^{-2}$ und $b_n^{-1}$ bei fehlender negativer Überschreitung der Extrem- und Zwischenwerte auf Logikpegel 0 befinden, dadurch gekennzeichnet, daß die kombinatorischen Logikmittel mit den Speichern für die positiven und negativen Binärkomponenten derart verbunden sind, daß für die an den Eingang des Speichers für die positive Binärkomponente angelegte positive Binärkomponente tn des Symbols Sn die logische Gleichung

$$t\overset{+}{n} \;=\; b_n^{+2} \;+\; b_n^{+1} \cdot \overline{t\overset{+}{n-1}} \;+\; \overline{b_n^{+2}} \cdot \overline{b_n^{+1}} \cdot \overline{b_n^{-1}} \cdot \overline{b_n^{-2}} \cdot t\overset{+}{n-1}$$

und für die an den Eingang des Speichers für die negative Binärkomponente angelegte negative Binärkomponente tn des Symbols Sn die logische Gleichung

$$t\overline{n} \;=\; b_n^{-2} \;+\; b_n^{-1} \cdot \overline{t\overline{n-1}} \;+\; \overline{b_n^{+2}} \cdot \overline{b_n^{+1}} \cdot \overline{b_n^{-1}} \cdot \overline{b_n^{-2}} \cdot t\overline{n-1}$$

überprüft wird.

9

3. Logische Detektorschaltung nach Anspruch 2, dadurch gekennzeichnet, daß die ersten kombinatorischen Logikmittel aufweisen:
- ein erstes logisches Tor (108) vom ODER-Typ mit drei Eingängen, das mit seinem Ausgang an den Eingang des Speichers (104) für die positive Binärkomponente angeschlossen ist und an einem ersten Eingang das Überschreitungssignal des vom Komparator (1) gelieferten positiven Extremschwellwerts empfängt, und
- ein zweites logisches Tor (111) vom ODER-Typ mit drei Eingängen, das mit seinem Ausgang an den Eingang des Speichers (105) für die negative Binärkomponente angeschlossen ist und an einem ersten Eingang das Überschreitungssignal des vom Komparator (1) gelieferten negativen Extremschwellwerts empfängt.

4. Logische Detektorschaltung nach Anspruch 3, dadurch gekennzeichnet, daß die zweiten kombinatorischen Logikmittel aufweisen:
- ein erstes logisches Tor (109) vom NOR-Typ mit zwei Eingängen, das mit seinem Ausgang an einen zweiten Eingang des ersten logischen Tors (108) vom ODER-Typ der ersten kombinatorischen Logikmittel angeschlossen ist und an einem Eingang das Überschreitungssignal des vom Komparator (1) gelieferten und von einem Inverter (101) komplementierten positiven Zwischenschwellwertes empfängt, und am anderen Eingang das Ausgangssignal des Speichers (104) für die positive Binärkomponente, und
- ein zweites logisches Tor (112) vom NOR-Typ mit zwei Eingängen, das mit seinem Ausgang an einen zweiten Eingang des zweiten logischen Tors (111) der ersten kombinatorischen Logikmittel angeschlossen ist und an einem Eingang das Überschreitungssignal des vom Komparator gelieferten und von einem Inverter (102) komplementierten negativen Zwischenschwellwertes empfängt, und am anderen Eingang das Ausgangssignal des Speichers (105) für die negative Binärkomponente.

5. Logische Detektorschaltung nach Anspruch 3, dadurch gekennzeichnet, daß die dritten kombinatorischen Logikmittel aufweisen:
- ein erstes logisches Tor (110) vom NOR-Typ mit fünf Eingängen, das mit seinem Ausgang an einen dritten Eingang des ersten logischen Tors (108) vom ODER-Typ der ersten kombinatorischen Logikmittel angeschlossen ist und an vier Eingängen die vier Schwellwertüberschreitungssignale des Komparators und an einem fünften Eingang das komplementierte Signal vom Ausgang des Speichers (105) für die negative Binärkomponente empfängt, und
- ein zweites logisches Tor (113) vom NOR-Typ mit fünf Eingängen, das mit seinem Ausgang an einen dritten Eingang des zweiten logischen Tors (111) vom ODER-Typ der ersten kombinatorischen Logikmittel angeschlossen ist und an vier Eingängen die vier Schwellwertüberschreitungssignale des Komparators und an einem fünften Eingang das komplementierte Signal vom Ausgangs des Speichers (104) für die positive Binärkomponente empfängt.